**Europäisches Patentamt**

**European Patent Office**

**Office européen des brevets**

(19)

(11) Publication number : **0 222 809**
**B1**

# (12) EUROPEAN PATENT SPECIFICATION

(45) Date of publication of patent specification :
**19.07.89**

(21) Application number : **86902880.3**

(22) Date of filing : **09.05.86**

(86) International application number :
**PCT/GB 86/00251**

(87) International publication number :
**WO/8606682 (20.11.86 Gazette 86/25)**

(51) Int. Cl.⁴ : **B 29 C 67/22**, B 29 C 39/10,
A 47 C 7/18

(54) **METHOD OF MANUFACTURING A MOULDED SEAT.**

(30) Priority : **09.05.85 GB 8511748**

(43) Date of publication of application :
**27.05.87 Bulletin 87/22**

(45) Publication of the grant of the patent :
**19.07.89 Bulletin 89/29**

(84) Designated contracting states :
**BE DE FR GB IT NL SE**

(56) References cited :
**DE–A– 2 746 686**
**FR–A– 2 262 588**
**GB–A– 2 053 774**

(73) Proprietor : **FORD MOTOR COMPANY LIMITED**
**Eagle Way**
**Brentwood Essex CM13 3BW (GB)**
**BE GB IT NL SE**
**FORD-WERKE AKTIENGESELLSCHAFT**
**Ottoplatz 2 Postfach 21 03 69**
**D-5000 Köln 21 (DE)**
**DE**
**FORD FRANCE SOCIETE ANONYME**
**344 Avenue Napoléon Bonaparte B.P. 307**
**F-92506 Rueil Malmaison Cedex (FR)**
**FR**

(72) Inventor : **YATES, Pierre, Ernest**
**The Whitehouse Roundwood Avenue**
**Hutton, Brentwood Essex (GB)**

(74) Representative : **Messulam, Alec Moses et al**
**A. Messulam & Co. 24 Broadway**
**Leigh on Sea Essex SS9 1BN (GB)**

## Description

The invention relates to a method of manufacturing a moulded seat pad for use in a motor vehicle, according to the preamble of claim 1 (GB-A-2,053,774).

It is known to form a seat pad by stretching upholstery material to conform to the surface of a mould cavity and subsequently filling the cavity with a foamed plastics material. The material may be made to conform to the surface of the mould cavity by first stretching the material over a preformer, inserting the preformer into the mould cavity and holding the stretched material against the walls of the mould cavity by application of a vacuum. When the foam has set, the seat pad is removed from the mould cavity. The pad may be secured to a frame after moulding but alternatively the frame may be moulded into the foamed plastics material.

GB-A-2,053,774 discloses a method of producing padded seat backs wherein a cushion coating is placed in a mould and is filled with polyurethane foam while the latter was still in a fluid state. The coating is made of two sheets which are heat sealed or electrically sealed together along a junction line in which a lining strip is included that projects to the outside of the coating and is provided with positioning lugs for positioning the coating in a mold.

DE-A-2,746,686 discloses the use of a preformer for making multimaterial seats. The multimaterial cover is held over the mould cavity and the preformer is used to push the cover into the mould cavity. Thereafter the foam is filled into the cover held in the mould cavity.

According to the present invention, there is provided a method of manufacturing a seat pad having a cover of two, or more, materials, which method comprises cutting blanks (26, 28) of the different materials, securing the blanks (26, 28) to one another by welding each pair of blanks to a joining strip (20) formed with one or more locating formations (25, 27) to positively locate the joining strip (s) during the moulding operation characterised by securing the blanks (26, 28) to one another by welding each pair of blanks to the joining strip (20) formed on its reverse side with one or more locating formations (25, 27), positively locating the joining strip(s) relative to a preformer (50) by mating engagement between the preformer (50) and the locating formations (25, 27) on the reverse side of the joining strip(s) (20), introducing the material into the mould cavity (40) while stretched on the preformer (50), stretching the material to conform to the shape of the mould cavity (40) and moulding a plastics foam into the stretched material.

The joining strip may be formed by injection moulding or by extrusion moulding. In the latter case, a single longitudinal rib or recess may serve as a formation for locating the joining strip relative to the preformer. If the joining strip is injection moulded, however, it may be provided along its length with a plurality of holes engageable by projecting pins in the preformer to locate the joining strip while the material is being stretched.

The invention will now be described further, by way of example, with reference to the accompanying drawings, in which :

Figure 1 shows a perspective view of a seat having seat pads with covers of two different materials,

Figure 2 shows two blanks of material being high frequency welded to a joining strip,

Figure 3 shows alternative constructions of the locating formations on the joining strips and on the preformer.

Figures 4A to 4D show the different stages in using a preformer to stretch the material blank to conform to the surface of the mould cavity.

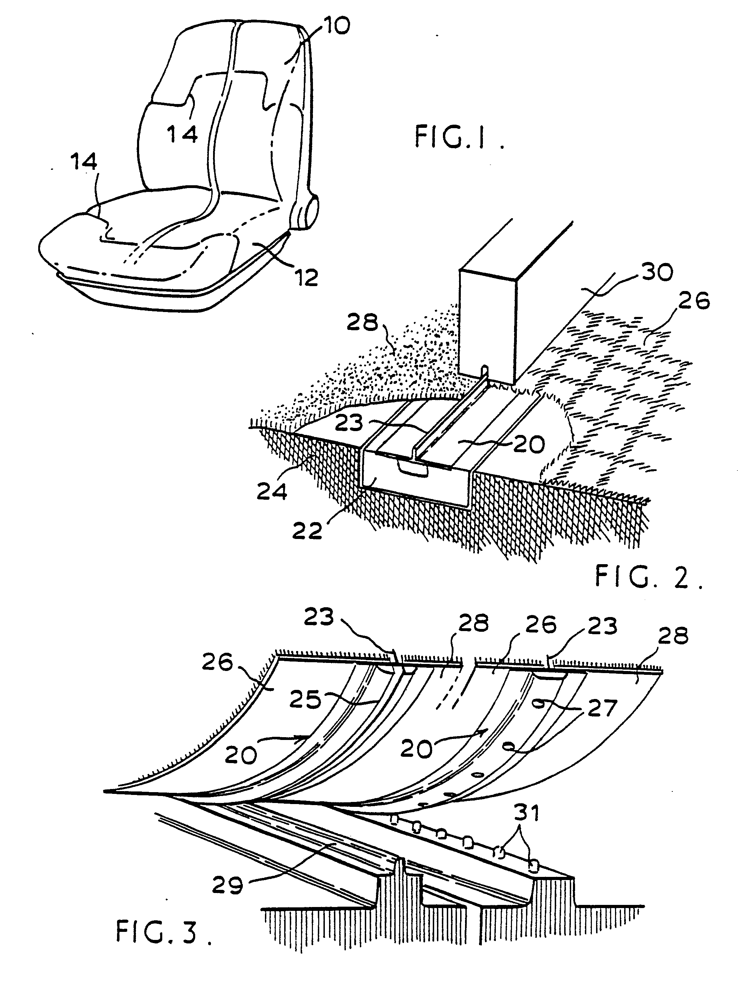

The vehicle seat in Figure 1 comprises a back portion 10 and a squab portion 12. Each of the two portions 10 and 12 comprises a moulded seat pad secured to a frame. The seat pads have covers of two different types of material, joined to one another along the join lines 14. The use of different materials is desirable both from the point of view of style and appearance and also for the purpose of improving comfort.

To enable such a seat pad to be manufactured by a moulding technique as described above, the invention proposes that the material blanks first be secured to one another using a joining strip.

In Figure 2, a joining strip 20, the construction of which will be described in more detail by reference to Figure 3, is placed over a high frequency bonding electrode 22 the surface of which is flush with the bed of a bonding press 24. The joining strip 20 has an upstanding rib 23 and the two material blanks 26 and 28 to be joined are placed over the strip 20 in abutment with the rib 23. When the joining strip is to be concealed in the finished seat pad then the material is welded facing upwards, as illustrated. A bond bar is brought down over the two material blanks 26, 28 and high frequency energy is applied to effect a bond between the blanks 26 and 28 the strip 20.

The side of the joining strip opposite the rib 23 is formed as shown in Figure 3 either with a continuous locating groove or recess 25 or with holes 27. The strip with the groove 25 can be formed by extrusion whereas the strip with holes 27 can be formed by injection moulding.

The purpose of the recess 25 or holes 27 is to enable positive location of the joining strips or on a preformer. These can be formed with mating formations 29, 31 as shown in Figure 3 so that the joining strips 20 are accurately located during the stretching of the material.

Figures 4A to 4B show the method of manufacture of a seat pad with the joining strip concealed within the foam. A preformer 50 is formed with formations 31 which can be seen in Figure 4D. The material blanks which have been prejoined using a joining strip 20 are placed over the preformer with the formations on the strips in registry with the mating formations 31 on the preformer 50. A two two part clamping frame 52, 54 is closed around the preformer and stretches the blanks to the shape of the preformer 50. This position is shown in Figure 4B.

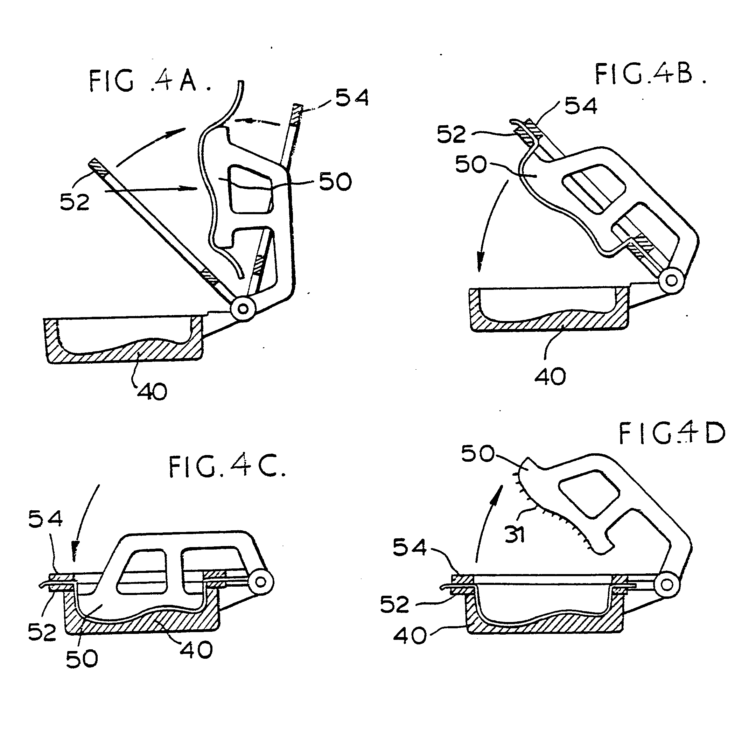

The preformer 50 together with the clamping frame 52, 54 is next lowered into the mould cavity 40 as shown in Figure 4C and a vacuum is applied to make the material blanks conform to the surface of the mould cavity 40. The vacuum is maintained while the preformer 50 is raised as shown in Figure 4D and the plastics foam is now cast into the mould cavity. Once the foam has cured, the complete seat pad may be removed from the mould cavity and the surplus material trimmed as necessary.

The advantage of the method of the invention is that it allows two or more material blanks to be joined prior to the moulding process and the join lines need not necessarily be straight. This provides greater flexibility in the design and even a greater latitude in the shaping of the seats as it is now possible to reduce the amount that the material has to be stretched even with complex contours.

## Claims

1. A method of manufacturing a seat pad having a cover of two, or more, materials, which method comprises cutting blanks (26, 28) of the different materials, securing the blanks (26, 28) to one another by welding each pair of blanks to a joining strip (20) formed with one or more locating formations (25, 27) to positively locate the joining strip (s) during the moulding operation characterised by securing the blanks (26, 28) to one another by welding each pair of blanks to the joining strip (20) formed on its reverse side with one or more locating formations (25, 27), positively locating the joining strip (s) relative to a preformer (50) by mating engagement between the preformer (50) and the locating formations (25, 27) on the reverse side of the joining strip (s) (20), introducing the material into the mould cavity (40) while stretched on the preformer (50), stretching the material to conform to the shape of the mould cavity (40) and moulding a plastics foam into the stretched material.

2. A method as claimed in Claim 1, wherein the joining strips are formed by extrusion.

3. A method as claimed in claim 1, wherein the joining strips are formed by injection moulding.

4. A method as claimed in any preceding claim, wherein the joining strips are arranged on the same side of the material as the foam.

## Patentansprüche

1. Verfahren zur Herstellung eines Sitzpolsters mit einem Bezug aus zwei oder mehreren Materialien, umfassend den Zuschnitt von Rohteilen (26, 28) aus den verschiedenen Materialien, Befestigen der Rohteile (26, 28) aneinander durch Verschweißen jedes Rohteilpaares mit einem Verbindungsstreifen (20), der zum positiven Positionieren des (der) Verbindungsstreifen(s) während des Formprozesses mit einem oder mehreren Positionierformteilen (25, 27) ausgebildet ist, gekennzeichnet durch das Befestigen der Rohteile (26, 28) miteinander durch Verschweißen jedes Rohteilpaares mit dem Verbindungsstreifen (20), der an seiner Rückseite mit einem oder mehreren Positionierformteilen (25, 27) ausgebildet ist, positives Positionieren des (der) Verbindungsstreifen(s) relativ zu einer Vorformvorrichtung (50) durch eine ineinandergreifende Verbindung zwischen der Vorformvorrichtung (50) und den Positionierformteilen (25, 27) auf der Rückseite des (der) Verbindungsstreifen(s), Einführen des Materials in den Formhohlraum (40) unter gleichzeitigem Strecken auf der Vorformvorrichtung (50), Strecken des Materials entsprechend der Form des Formhohlraums (40) und Einformen eines Schaumstoffs in das gestreckte Material.

2. Verfahren nach Anspruch 1, worin die Verbindungsstreifen durch Extrudieren geformt werden.

3. Verfahren nach Anspruch 1, worin die Verbindungsstreifen im Spritzgußverfahren geformt werden.

4. Verfahren nach einem der vorhergehenden Ansprüche, worin die Verbindungsstreifen auf derselben Seite des Materials wie der Schaumstoff angeordnet sind.

## Revendications

1. Procédé de fabrication d'un coussin de siège ayant un revêtement formé d'au moins deux matériaux, le procédé comprenant la découpe de flans (26, 28) de matériaux différents, la fixation des flans (26, 28) l'un à l'autre par soudage de chaque paire de flans à une bande de jonction (20) ayant un ou plusieurs organes de positionnement (25, 27), afin que la bande ou les bandes de jonction soient positionnées positivement pendant l'opération de moulage, caractérisé par la fixation des flans (26, 28) l'un à l'autre par soudage de chaque paire de flans à la bande de jonction (20) qui a, à son dos, un ou plusieurs organes de positionnement (25, 27), le positionnement positif de la bande ou des bandes de jonction sur une préforme (50) par mise en coopération de la préforme (50) et des organes de positionnement (25, 27) du dos de la bande ou des bandes de jonction (20), l'introduction du matériau dans la cavité d'un moule (40) lorsque le matériau est tendu sur la préforme (50), l'étirage du matériau afin qu'il prenne la configuration de la cavité du moule (40), et le moulage d'une mousse de matière plastique dans le matériau tendu.

2. Procédé selon la revendication 2, dans lequel les bandes de jonction sont formées par extrusion.

3. Procédé selon la revendication 1, dans lequel les bandes de jonction sont formées par moulage par injection.

4. Procédé selon l'une quelconque des revendications précédentes, dans lequel les bandes de jonction sont disposées du même côté du matériau que la mousse.

FIG.1.

FIG. 2.

FIG.3.

FIG.4A.

FIG.4B.

FIG.4C.

FIG.4D